Europäisches Patentamt

European Patent Office

Office européen des brevets

(11) Veröffentlichungsnummer: **0 225 632 B1**

# EUROPÄISCHE PATENTSCHRIFT

(45) Veröffentlichungstag der Patentschrift: **03.06.92**

(51) Int. Cl.⁵: **G01N 1/10**, G01N 1/20

(21) Anmeldenummer: **86117097.5**

(22) Anmeldetag: **09.12.86**

(54) **Verfahren und Vorrichtung zur integrierenden Probenahme und in-line Probenteilung von dispersen Produkten aus Transportleitungen oder an Produktstromübergabestellen.**

(30) Priorität: **11.12.85 DE 3543758**

(43) Veröffentlichungstag der Anmeldung:
**16.06.87 Patentblatt 87/25**

(45) Bekanntmachung des Hinweises auf die
Patenterteilung:
**03.06.92 Patentblatt 92/23**

(84) Benannte Vertragsstaaten:
**AT BE CH ES FR GB IT LI LU NL SE**

(56) Entgegenhaltungen:
EP-A- 0 160 945     BE-A- 677 897
DE-A- 2 952 248     FR-A- 2 182 283
GB-A- 1 226 196     US-A- 3 109 306
US-A- 4 080 831     US-A- 4 524 628

AUFBEREITUNGS-TECHNIK, Nr. 12, 1976, Seiten 621-623, Wiesbaden; E. WILLMANN "Ein automatisch arbeitender Probenehmer und -teiler für Kokskohle"

(73) Patentinhaber: **Röthele, Stephan, Dipl.-Ing.**
**Am Rollberg 5**
**W-3392 Clausthal-Zellerfeld(DE)**

(72) Erfinder: **Röthele, Stephan, Dipl.-Ing.**
**Am Rollberg 5**
**W-3392 Clausthal-Zellerfeld(DE)**

(74) Vertreter: **Behrens, Dieter, Dr.-Ing. et al**
**Wuesthoff & Wuesthoff Patent- und Rechts-**
**anwälte Schweigerstrasse 2**
**W-8000 München 90(DE)**

**Beschreibung**

Die Analyse von Produktqualitäten in Produktionsprozessen erfolgt insbesondere bei der Herstellung von Massengütern an Hand ausgewählter Teilproben, die aus dem Prozeß entnommen werden. Für die anschließenden Analysen im Labor werden meist nur geringe Probenmengen von wenigen Gramm oder sogar Milligramm benötigt, so daß sich die Aufgabe, kleinste, repräsentative Analysenprobenmengen aus großen Produktionsströmen von einigen Tonnen je Stunde zu entnehmen, reproduzierbar zuverlässig überhaupt nur lösen läßt, wenn zunächst größere Teilmengen entnommen und anschließend durch kontrollierte repräsentative Probenteilung die kleinen, erforderlichen Analysenprobenmengen gewonnen werden.

Die sogenannte off-line Qualitätskontrolle bei dispersen Produkten stellt heute innerhalb von wenigen Stunden bis zu einem Tag ein Analysenergebnis zur Produktbeurteilung zur Verfügung. Allerdings erfolgt die Probenahme und Probenteilung i.allg. nur in zeitlichem Abstand und immer noch eher einfach (US-Patenschrift 3,109,306). Sie muß hinsichtlich der Prozedur, der Reproduzierbarkeit und Systematik gerade auch im Vergleich zu den mittlererweile verfügbaren off-line Meßgeräten als die mit Abstand schwächste Stelle in der Informationskette zum Prozeß betrachtet werden, auch wenn schon erste kontinuierlich arbeitende Probenehmer angegeben sind, mit denen sich jedoch unmittelbar nur grob Analysenprobenmengen gewinnen lassen (US Patentschrift 4,080,831, GE-Patentschrift 1 126 196). Diese Probenehmer würden daher höchstens quasi-kontinuierlich arbeiten, da auf sie die Anforderungen des ihnen nachgeordneten Analysegeräts übertragen werden.

Zunehmende Automation, Rationalisierung und verstetigte Qualitätskontrolle an Produktströmen lassen die in zeitlichen Abständen vorgenommene manuelle Stichprobenentnahme insbesondere wegen ihrer begrenzten Repräsentativität dann äußerst fragwürdig erscheinen, wenn die Laboranalysen mit hochgenauen Meßgeräten vorgenommen werden. Die Charakterisierung disperser Produkteigenschaften durch zumindest quasi- kontinuierliche Partikelgrößenanalyse, z.B. mit einem Laser-Beugungsspektrometer, macht diese Diskrepanz mittlerweile besonders spürbar.

Der Entwicklungsschritt zur on-line-Produktionskontrolle mit dem Ziel der Prozeßsteuerung setzt schließlich eine Entnahmeschnittstelle voraus, mit der es möglich ist, innerhalb kurzer Zeit von z.B. wenigen Minuten über eine kleine Analysenprobenmenge zu verfügen, die nicht nur repräsentativ sondern auch quantitativ für die Analyse geeignet ist.

Eine systematische Einteilung der denkbaren Entnahmearten für disperse Produkte muß zwischen Produktionsprozessen unterscheiden, bei denen das Produkt in einem fluiden Trägermittelstrom, der naß (Wasser) oder trocken (Luft) sein kann, oder als abgeschiedenes, trägermittelfreies Schüttgut transportiert wird, wie es z.B. hinter Zyklon, Mühle, Sichter, Bunker oder dergl. vorliegt und aus einer Transportleitung oder einem Fallschacht oder von einem Förderband abgegeben oder zur weiteren Bearbeitung übergeben wird.

Die bekannten Probenahmegeräte, wie z.B. Pipette, Stech- oder Probenheber, Eintauchsammler, Probenahmeventile, stationäre Absaugsonden, Probenstecher, Probenabstreifer, Pendel (GB Patentschrift 1 226 196)- oder Schlagprobenehmer, halboffene geschlitzte Entnahmerohre (US-Patentschrift 3,109,306) oder Förderschnecken, die jeweils nur einen kleinen Teil der zu erfassenden Querschnitte des Produktionsstromes erfassen, sind für die komplexen Aufgaben im on-line Betrieb nicht oder höchstens bedingt geeignet.

Für den Fall der Bandübergabe sind Probenahmegeräte bekannt, die an Produktübergabestellen, z.B. der Obergabe von einem Förderband auf ein anderes Förderband, als sogenannte Schlitzprobenehmer intermittierend unter der Produktübergabestelle hin- und herbewegt werden und für dieses ebene, lineare Entnahmeproblem eine für weniger anspruchsvolle Anwendungsfälle anwendbare Problemlösung darstellen, wenn das Teilungsverhältnis nicht größer als 1:100 wird.

Bei rotationssymmetrischen Prozeßquerschnitten, die beim Transport von dispersen Produkten in einem nassen oder trockenen Transportmittel üblich sind (Transportleitungen), können bekannte intermittierende oder rotierende Schlitzprobennehmer jedoch nicht bei hohen Anforderungen an die Aussagegenauigkeit eingesetzt werden.

Der Erfindung liegt die Aufgabe zugrunde, ein Verfahren und eine Vorrichtung zur Probenahme aus Strömen disperser Produkte aus Transportleitungen oder an Produktübergabestellen und Probenteilung auf einen für eine anschließende on-line Probenanalyse geeigneten repräsentativen kleinen Analysenprobenstrom zu schaffen.

Verfahren und Vorrichtung, die diese Aufgabe lösen, sind mit ihren Ausgestaltungen in den Ansprüchen gekennzeichnet.

Um den Anforderungen in einem on-line-Betrieb zu entsprechen, erfolgt eine kontinuierliche und repräsentative Probenahme von bis zu 1/100 des Produkthauptstroms in einem rotationssymmetrischen Transportquerschnitt des Produktionsprozesses. Dabei ist durch die Verwendung einer den ganzen Transportquerschnitt radial überstreichenden kreissektorförmigen Entnahmeöffnung sichergestellt, daß sämtliche Flächenanteile des Transportquerschnitts bei der Probenahme repräsentativ berücksichtigt werden und eine ausreichend große Teilprobe (bis 1/100 des Produkthauptstroms) intergrierend entnommen wird, damit in dem in-line nachgeschalteten Probenteiler auch zeitlich repräsentativ auf den für eine repräsentative Probenanalyse erforderlichen kleinen Analysenprobenmassestrom im Verhältnis von bis zu 1:1000 heruntergeteilt werden kann. Es wird auf diese Weise nur der für die nachgeordnete Probenanalyse, die eine Korngrößenanalyse sein kann, erforderliche kleinste Probenstrom aus dem Prozeß herausgeführt, während der übrigbleibende Restteilstrom unmittelbar in dem Prozeßproduktstrom bzw. Produkthauptstrom verbleibt bzw. in diesen zurückgegeben wird.

Das neue Verfahren und die entsprechende Vorrichtung lösen die gestellte Aufgabe so, daß im zeitlichen Mittel aus dem gesamten Transportquerschnitt des Produktes kontinuierlich mindestens ein Teilstrom repräsentativ entnommen und der in-line nachgeschalteten Probenteilung zugeführt wird. Dies wird dadurch erreicht, daß der Öffnungsquerschnitt zur Entnahme des Teilstroms sowohl von der Form als auch von seiner zeitlichen Lage der örtlichen und zeitlichen Entnahmesituation anpaßbar ist.

Konventionelle Teilstrom-Probenahmeverfahren, wie z.B. die Absaugung mit Sonden gemäß VDI-Richtlinie 2066, tasten den Produktstromquerschnitt punktweise nach einem vorgegebenen Raster in durch das Probenanalysengerät gesteuertem zeitlichen Abstand traversierend ab. Dieses Probennahmeverfahren verfügt weder über ein hohes, lokales Auflösungsvermögen noch über eine aussagekräftige Integrationswirkung in bezug auf den gesamten Transportquerschnitt, da die Gewichtung der einzelnen Entnahmepunkte von hypothetischen Annahmen über die Qualität der quasistationären Anströmung und die Homogenität der Verteilung des dispersen Produkts im Transportquerschnitt und über die Zeit ausgehen muß.

Es erfolgt die Anpassung nach Form und Zeit zur Entnahme des Teilstromes aus dem Hauptstrom über einen Entnahmequerschnitt bzw. eine Entnahmeöffnung, deren äußere Begrenzungen einen Kreissektor mit dem Öffnungswinkel $\alpha$ bilden, der mit seiner Sektorspitze um den in der Rohrachse des Produkthaupttransportstroms liegenden Drehpunkt langsam rotiert. Die Drehgeschwindigkeit $\omega$ wird nur so hoch gewählt, daß keine störenden Rückwirkungen auf den Produktstrom entstehen. Dadurch ist die Probenentnahme repräsentativ in Bezug auf den Entnahmequerschnitt.

Das erzielte Entnahmeverhältnis von Teilstrom zum Hauptstrom beträgt $\alpha/360°$. Der Radius des Kreissektors muß mindestens gleich oder größer als der Radius der zylindrischen Transportleitung für den Hauptstrom sein, damit alle Flächenanteile innerhalb einer Umdrehung einmal vollständig erfaßt werden. Eine volle Umdrehung entspricht einer Integration über den gesamten Hauptstrom-Transportquerschnitt. Die Rotationsgeschwindigkeit darf nicht mit eventuellen Schwankungsfrequenzen des Hauptstromes übereinstimmen. Mit der Anzahl der Integrationszyklen, aus denen die gesamte Teilprobe summarisch gebildet wird, steigt deren Zuverlässigkeit zur Beurteilung des Produktstromes.

Statt eines einzigen Kreissektors können auch zwei sich gegenüberliegende Kreissektoren als Entnahmeöffnung ausgebildet sein. Das Entnahmeverhältnis beträgt dann $2\alpha/360°$, wenn die Winkel gleich sind bzw. $(\alpha_1 + \alpha_2)/360°$, wenn unterschiedliche Sektorwinkel zur Anwendung kommen.

Insbesondere bei groben Partikeln im Produkthauptstrom kann es zur Unstetigkeit in der Integrationswirkung kommen. Dies vermeidet man durch den Aufsatz einer konusförmigen Spitze bzw. eines Abweisekonus, die bzw. der in der kreisförmigen Basis so groß ausgeführt wird, daß die kleinste, nahe beim Drehpunkt liegende sektorförmige Entnahmeöffnung in tangentialer Richtung erheblich größer, vorzugsweise wenigstens zehnmal größer als die Abmessungen der gröbsten im Produkthauptstrom enthaltenen Partikeln entspricht.

Der Abweisekonus ist dabei so steil auszuführen wie der Ablenkkonus, über dem er angeordnet ist, so daß die im unmittelbaren Zentrum auftreffenden Partikel ohne weiteres abgeführt und im Mittel repräsentativ in die Entnahmeöffnung geleitet werden. Außerdem wird so ein Verklemmen grober Partikel in der Eintrittsöffnung verhindert. Zur Vergleichmäßigung kann zusätzlich zwischen der Hauptleitung und dem Zwischenstück ein Sieb mit großen Maschen vorgesehen werden.

Mit on-line-Meßzyklen von ca. 5 Minuten Dauer werden bei einer Meßzeit von einer Minute und stetiger Probenahme im Mittel Teilmengen aus 100 bis 200 Integrations-Umdrehungen erhalten, wenn die Drehgeschwindigkeit bis zu 1/2 Umdrehung pro Sekunde beträgt. Da die Ausbildung der Entnahmeöffnung mit Sektoröffnungswinkeln $\alpha$ unter 5° wegen der Zunahme der Umrandungseinflüsse bei kleinen Winkeln technisch nicht zu empfehlen ist, sollte der Entnahme-Teilstrom wenigstens etwa 1,5 % des Produkthauptstromes betragen. Die erforderliche kontinuierliche Reduzierung auf einen Analysenprobenstrom wird mit dem unmittelbar nachgeschalteten Probenteiler verwirklicht. Als Orientierung kann gelten, daß zur on-line-Analyse zwischen 1 % und 0,001 % des Produkthauptstromes benötigt werden, wobei, wie oben ausgeführt, die Probenahme den Teilungsschritt in den Prozentbereich leisten kann und die anschließende in-line-Probenteilung des Teilstroms durch entsprechende Ausgestaltung die weitere Reduzierung um zusätzlich zwei bis drei Zehnerpotenzen repräsentativ leisten muß.

Dies kann so verwirklicht werden, daß der mit der Kreissektor-Entnahmeöffnung entnommene kontinuierliche Teilstrom in eine diskrete Folge von Teilströmen aufgespalten wird, die als Einzelströme durch ausgewählte Zusammenfassung, z.B. jedes 8., 16. oder 32. usw. Einzelstroms zuletzt zum Analysenprobenstrom zusammengefaßt werden. Durch die starke Unterteilung in zunächst hunderte von Einzelströmen und die systematische Durchführung der Stichprobensammlung ist nur noch mit sehr kleinen systematischen Fehlern zu rechnen.

Die Erfindung läßt eine direkte Anpassung der Gewinnung der Analyseprobe an die Meßfähigkeit des on-line Analysensystems zur repräsentativen Beurteilung des Produktes bzw. Prozesses zu. Das eingesetzte on-line Analysensystem erlaubt somit den zu regelnden Prozeßapparat und das Analysengerät so zu einem kontinuierlich arbeitenden System zu verbinden, daß über die Funktion des Systems die Gültigkeit und Aussagefähigkeit der Analysenergebnisse nicht fragwürdig wird. Dazu wird ein Prozeßsignal als kontinuierlicher Zeitmittelwert gewonnen. Es ist nicht wie bei einer Scharmittelwertbestimmung Ergodizität Voraussetzung, d.h. die Entnahme von einzelnen Stichproben bedingt nicht, daß der Probeentnahmerythmus auch als Zufallsprozeß ebenfalls stochastisch ist. Ergodizität ist am Produktionsprozeß nur schwer überprüfbar und bei schwankenden Einfluß- und Meßgrößen, die eine on-line Prozeßführung bzw. -regelung erforderlich machen, ohnehin meist nicht gegeben. Einem Probenmeßgerät, das alle 10 min meßbereit ist, kann nicht repräsentative Analysenergebnisse erzielen, wenn ihm alle 10 min eine Analysenprobe zugeführt wird, die in ihrer Menge nur dem Mengenbedarf des Analysengeräts entspricht und völlig ignoriert, was zwischen den Probeentnahmezeitpunkten im Produktionsprozeß abgelaufen ist.

Die neue Vorrichtung kann grundsätzliche zwei unterschiedliche Ausgestaltungen haben. Die erste Ausgestaltung verwirklicht das Probenahmeverfahren, wenn die dispersen Produkte in fluiden Transportmitteln enthalten sind, also in einem Trägermittel gefördert werden. Die zweite Ausgestaltung realisiert die Probenahme von Schüttgütern in vertikalen Transportleitungen bzw. Fallschächten, in denen der Produkthauptstrom ohne Transportmittel frei fällt. Bei der ersten Ausgestaltung muß gegenüber der zweiten Ausgestaltung bei sonst prinzipiell gleicher Abfolge der Teilschritte während der Probenahme bzw. der Erzeugung des Teilstromes zusätzlich die gleichzeitige geschwindigkeitgleiche (isokinetische) Absaugung des Fluid-bzw. Trägermittelstromes gewährleistet sein.

Ausführungsbeispiele der neuen Vorrichtung sind an Hand einer Zeichnung näher erläutert, in der zeigt:

Fig. 1    eine Schnittansicht einer ersten Ausführungsform für die Probenahme und -teilung eines trägermittelgeförderten Produkthauptstromes,

Fig. 2    eine Schnittansicht einer zweiten Ausführungsform für die Probenahme und -teilung eines in einer vertikalen Transportleitung frei fallenden Produkthauptstromes,

Fig. 3    eine Schnittansicht einer gegenüber Fig. 2 etwas abgewandelten Ausführungsform,

Fig. 4    eine Schnittansicht von zwei Ausführungsformen des Probenteilers nach Fig. 2 zur Einstellung des Probenteilungsverhältnisses,

Fig. 5    eine abgewandelte Ausführungsform mit einem als Riffelteiler ausgebildeten Probenteiler, und

Fig. 6    eine gegenüber Fig. 5 abgewandelte Ausführungsform mit einer anderen Ausgestaltung der Sicherheitsabsiebung,

Fig. 7    eine Schnittansicht einer weiteren Ausführungsform mit in-line hintereinandergeschalteten Riffelteilern als Probenteiler.

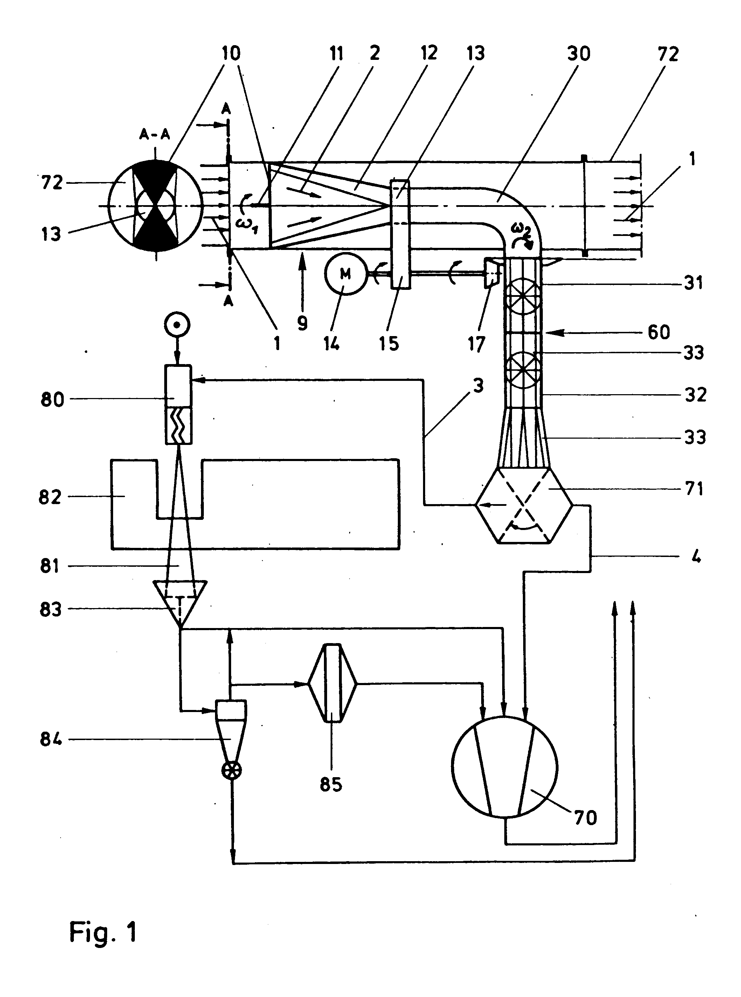

An Hand von Fig. 1, die eine Vorrichtung zur integrierenden Probenahme und in-line-Probenteilung bei gleichzeitig isokinetischer Fluid- bzw. Trägermittelabsaugung darstellt, ist eine erste Ausgestaltung des erfindungsgemäßen Verfahrens erläutert. Ein in einem Transportrohr anströmender Produkt-Hauptstrom 1 trifft auf eine in diesem Fall von einem Doppelsektor gebildete Entnahme- bzw. Mündungsöffnung 10 eines drehbar gelagerten Entnahmekopfes 12 eines Probenehmers 9, der sich mit der Winkelgeschwindigkeit $\omega_1$ um die Transportrohrachse langsam dreht und durch die ein Teilstrom 2 dem Hauptstrom 1 entnommen wird. Im Drehzentrum ist in oder unmittelbar vor der Entnahmeöffnung 10 ein Sensor 11 vorgesehen, der die Meßinformation zur Einstellung eines Absaugaggregates 70, z.B. eines Saugventilators, für die isokinetische Absaugung des Transportmittels liefert.

Der Sensor 11 kann im Falle der Entnahme aus einer Gas-Feststoff-Zweiphasenströmung eine Druckbohrung mit anschließender Kapillarleitung sein, die den statischen Druck des Hauptstromes mißt und zusammen mit einer zweiten Druckbohrung im Absaugrohr zur Messung des statischen Druckes im Teilstrom die Grundinformationen zum isokinetischen Betrieb der Probenahme nach dem bekannten Prinzip der Differenzdrucksonden liefert.

Im Falle der Probenahme aus Flüssig-Feststoff-Transportströmungen kann der Sensor 11 als Korrelationselement ausgebildet sein, mit dem über die Messung der Partikelgeschwindigkeiten im Hauptstrom die richtige Entnahmegeschwindigkeit für den abzusaugenden Teilstrom einstellbar ist. Bekannte Ausführungsformen von Korrelationsmeßstellen sehen in Strömungsrichtung zwei hintereinandergeschaltete optische Meßaufnehmer, z.B. Glasfasersensoren, vor, aus deren Signalstruktur mittels eines Korrelationsverfahrens über die Laufzeitverschiebung auf die Geschwindigkeiten geschlossen werden kann.

Hinter dem Doppelsektor der Entnahmeöffnung 10 wird der Querschnitt des drehbar gelagerten, drehangetriebenen Entnahmekopfes 12 so verformt, daß ein Übergangsquerschnitt 13 vom drehenden Entnahmekopf 12 in eine feststehende kreiszylindrische Entnahmeleitung 30 kreisförmig ist. Fertigungstechnisch gelingt dies einfach mit zwei Dreieckblechen, die in der jeweiligen Symmetrieachse gesickt und um den Winkel (180-$\alpha$) abgekantet, an der Entnahmeöffnung im Knickpunkt verbunden und mit zwei konischen Halbschalen abgedeckt sind, wobei sich die Halbschalen am Übergangsquerschnitt 13 zu einer Kreisöffnung verbinden.

Die feststehende, verlängerte, gekrümmte Entnahmeleitung 30 des Probenehmers 9 leitet den Teilstrom 2 aus dem Hauptstrom 1 auf einen in-line Probenteiler 60 aus einem sich im Betrieb drehenden zylindrischen Kopfstück 31 und einem nachgeordneten zylindrischen Stator 32. Sowohl das Kopfstück 31 als auch der Stator 32 sind mit feststehenden Einbauten in Form achsparalleler Zwischenwände in sektorförmige Leitkanäle 33 aufgeteilt, die anschließend einzeln in einen Konzentrator 71 übergeben werden, um aus dem unterteilten Teilstrom 2 den Analysenprobenstrom zu gewinnen.

Der Antrieb des Entnahmekopfes 12 und des drehenden Probenteiler-Kopfstückes 31 erfolgt mit demselben Antrieb 14 (Motor M), wobei die Übersetzungsverhältnisse so gewählt werden, daß $\omega_2 > \omega_1$ ist, ohne ein ganzzahliges Vielfaches zu betragen, und $\omega_2$ wiederum nicht synchron zu einer eventuellen Oszillation im Hauptstrom 1 gewählt sein darf.

Der Probenteiler 60 aus drehendem Kopfstück 31 und feststehendem Stator 32 kann zusammen mit dem Konzentrator 71 auch in eine Hauptleitung 72 hinter dem Entnahmekopf 12 direkt eingebaut sein. Der Antrieb würde dann am Übergabequerschnitt mit unterschiedlichen Drehzahlen durch ein gemeinsames Getriebe 15 verwirklicht.

Der Konzentrator 71 ist so ausgebildet, daß durch stufenweise Zusammenfassung ein für die anschließende Verwendung benötigte Analysenprobenmassenstrom 3 vorgewählt und richtig eingestellt werden kann. Ein verbleibender Restteilstrom 4 wird mit dem Absaugaggregat 70 in den Hauptstrom 1 zurückgeführt oder verworfen.

Die Verwendung des repräsentativ entnommenen und probengeteilten Analysenprobenmassenstromes 3 erfolgt in einer Meßstrecke zur on-line-Partikelgrößenanalyse. Nach dem Passieren eines druckluftgespeisten Prallflächen-Dispergierers 80 wird der Probenstrom als Freistrahl 81 durch die Meßzone eines Beugungsspektrometers 82 geblasen. Mit einem Auffangtrichter 83 wird der sich erweiternde Freistrahl 81 erfaßt und entweder direkt oder über einen Abscheidezyklon 84 in den Hauptstrom 1 zurückgeführt. Diese Abscheidung im Zyklon 84, gekoppelt mit einem Strömungsfilter 85 ermöglicht eine konventionelle Überprüfung der on-line erzielten Meßergebnisse.

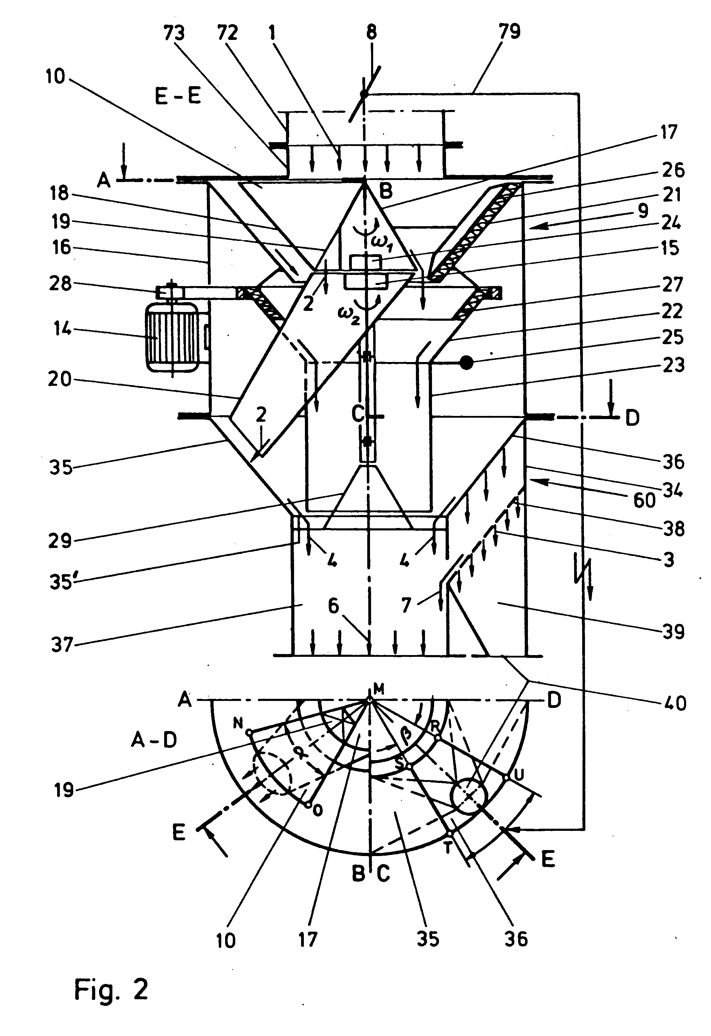

In Fig. 2 ist die Vorrichtung zur Durchführung des Verfahrens hinter einer Transportleitung oder einem Fallschacht mit den beiden Schnitten E-E und A-D dargestellt.

In der Draufsicht A-D erkennt man im linken Sektor AMB einen Kreissektor NMO als die rotierende Entnahmeöffnung 10. Der Kreissektor schließt zwischen seinen Eckpunkten NO den Winkel ein. Der Sektorradius MN bzw. MO ist merklich größer ausgelegt als der Radius der vertikalen Hauptleitung bzw. des Fallschachtes 72, was deutlich im Schnitt E-E in der Schnittlinie A-B erkennbar wird. Die Durchmesser-Differenz zwischen Fallschacht 72 und einem Probenehmergehäuse 16 wird mit einem Zwischenstück 73 überbrückt. Mit der dargestellten Anordnung können alle Fallschachtdurchmesser, die kleiner oder gleich dem zweifachen Sektorradius MN sind, zur Probennahme bestückt werden.

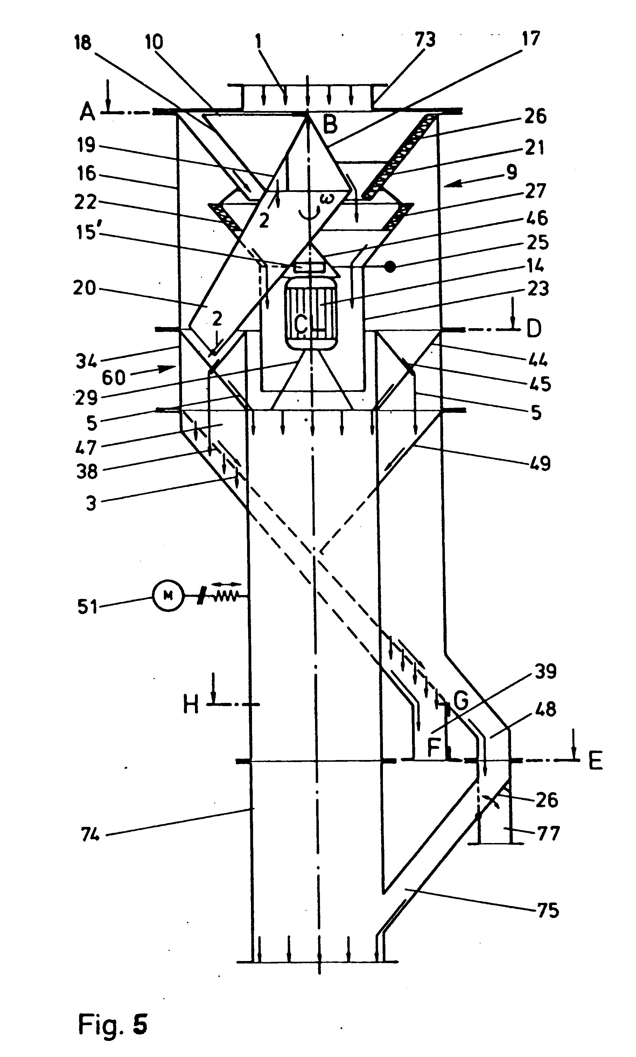

Die Entnahmeöffnung 10 befindet sich eingangsseitig eines sich in Strömungsrichtung verjüngenden, als Entnahmekopf dienenden Mündungstrichters 18 an einem entgegen der Strömungsrichtung spitz zulaufenden drehantreibbar gelagerten hohlen Ablenkkonus 17. An diesen Ablenkkonus 17 ist der Mündungstrichter 18 längs einer senkrechten Schnittebene im unteren Bereich angesetzt. Dadurch entsteht die in der Draufsicht A-D ausgekreuzte Auslaßöffnung 19. Der durch sie entnommene Teilstrom 2 wird in ein um die Achse des Umlenkkonus 17 mit der Winkelgeschwindigkeit $\omega_2$ umlaufendes Verteilerrohr 20 übergeben. Der an der Entnahmeöffnung 10 bzw. am Mündungstrichter 18 vorbeifallende Hauptmassenstrom 1 wird von einem feststehenden ersten Sammelkonus 21 ins Fallzentrum zurückgeführt und in einen drehbaren zweiten Sammelkonus 22 mit anschließendem zentralen Rohrauslauf 23 weitergeleitet. Das Verteilerrohr 20 ist fest mit dem zweiten Sammelkonus 22 verbunden. Dieser wird von einem Motor 14 über einen Treibriemen 28 mit der Winkelgeschwindigkeit $\omega_2$ in Drehung versetzt. Dadurch dreht sich auch das Verteilerrohr 20 mit dieser Winkelgeschwindigkeit $\omega_2$. Der Antrieb ist

hier außerhalb des Gehäuses 16 angeordnet, so daß sowohl der Motor 14 als auch sein Treibriemen 28 keine Produktberührung haben. Die Kapselung des Antriebsraumes zwischen Gehäuse 16 und den Einbauten 17, 18, 20, 21, 22 und 23 wird durch die besondere Ausbildung einer Dichtungsbürste 27 erreicht, die gleichzeitig als Reinigungselement zwischen dem ersten bzw. oberen Sammelkonus 21 und dem zweiten bzw. unteren Sammelkonus 22 wirkt. Die angetriebenen Elemente 17, 18, 20, 22 und 23 sind auf einen Lagerbock 29 zentral gelagert. Der Antrieb des Ablenkkonus 17 und des Mündungstrichters 18 erfolgt über ein auch als Verbindungselement dienendes Getriebe, dessen untere Hälfte 15 in das Verteilerrohr 20 und dessen obere Hälfte 24 in den Ablenkkonus 17 eingebaut sind, aufgrund der Drehung des unteren Sammelkonus 22. Ein integrierter Antrieb ist in Fig. 5 dargestellt und an Hand von dieser beschrieben.

An der Außenseite des Ablenkkonus 17 ist eine Reinigungsbürste 26 befestigt, die mitrotiert und den ersten bzw. oberen feststehenden Sammelkonus 21 innen von Ablagerungen freihält und für einen stetigen Produktabfluß sorgt. Unterstützt wird die Reinigungsbürste 26 durch die ständige Vibration des Geräts mittels eines Vibrators 51, wie er in Fig. 5 dargestellt ist. Die rotierende Reinigungsbürste 26 liegt dem Mündungstrichter 18 gegenüber und ist als Fliehmasse so zu tarieren, daß die exzentrische Unwucht des Mündungstrichters 18 ausgeglichen wird.

Eine entsprechende Fliehmasse 25 zum Ausgleich der exzentrischen Unwucht des Verteilerrohres 20 ist am zweiten bzw. unteren, drehenden Sammelkonus 22 vorzusehen. Er selbst wird im oberen Zulaufbereich von der Dichtungsbürste 27 von Ablagerungen freigehalten, welche an der Außenfläche des ersten bzw. oberen Sammelkonus 21 abgestützt ist und feststeht bzw. sich nicht dreht. Bei staubgeschützter Ausführung kann mit einer entsprechend rotationssymmetrischen Bürstenanordnung der freie Durchtrittsquerschnitt zwischen den Sammelkonen 21 und 22 so verschlossen werden. Dies kommt vor allem dann zum Tragen, wenn, wie dargestellt, der zweite Sammelkonus 22 von außen, z.B. mittels des Treibriemens 28, gedreht wird und die Gehäusedurchführungen sowie die Antriebselemente keine Produktberührung haben sollen.

An das Probenehmer-Gehäuse 16 ist unterhalb der Schnittebene CD ein Gehäuse 34 des nachgeschalteten in-line Probenteilers angeflanscht. Das rotierende Verteilerrohr 20 übergibt den entnommenen Teilstrom 2 auf einen Teilertrichter 35. In der Draufsicht A-D erkennt man im Sektor CMD eine Teileröffnung 36 in der Teilertrichterinnenfläche, die sektorförmig ausgebildet und von den Eckpunkten RSTU begrenzt ist. Durch diese Teileröffnung 36 mit dem Sektorwinkel ß zwischen den Schenkeln MTS und MRU können ß/360° des Teilstromes durchfallen, während ein verbliebener Restteilstrom 4 (1 - ß/360°) vom Teilertrichter 35 durch dessen Auslaßöffnung 35′ in ein unteres Rückleitrohr 37 zum nicht entnommenen Hauptmassestrom 6 zurückgeleitet wird. Am Rückleitrohr 37 ist der Lagerbock 29 befestigt.

Unterhalb der Teileröffnung 36 ist ein leicht schräg gestelltes Sicherheitssieb 38 angeordnet, mit dem grobes Spritzkorn 7, Verunreinigungen oder Partikel, die außerhalb des Meßbereichs des nachgeschalteten Probenanalysators liegen, aus dem Analysenprobenstrom 3 abgetrennt und in das Rückleitrohr 37 zum Hauptstrom 6 zurückgeführt werden können. Der so vorbereitete Analysenprobenstrom 3 wird in ein Probenabgaberohr 39 gelenkt und für die nachfolgende Probenanalyse oder sonstige Verwendung an der Schacht-Übergabeöffnung 40 aus dem kombinierten Probennehmer-Probenteiler herausgeführt.

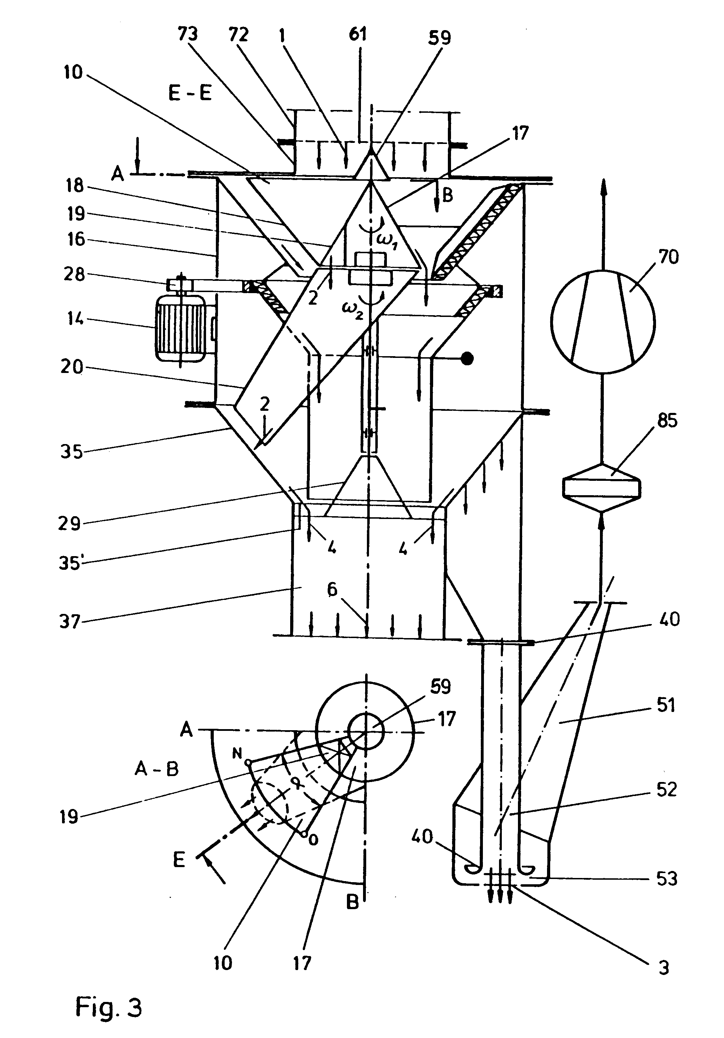

Fig. 3 zeigt im Schnitt E-E einen mittigen Abweisekonus 59, der so oberhalb des Ablenkkonus 17 angeordnet ist, daß er von der Bauhöhe vollständig in dem Zwischenstück 73 untergebracht und darüber noch ein großmaschiges Zwischensieb 61 zur gleichmäßigen Querverteilung des fallenden Schüttgutstromes 1 eingebaut werden kann. Im Viertelkreis-Teilschnitt A-B sind in der Draufsicht die Grundkreise der übereinander angeordneten Konen 59 und 17 zur Verdeutlichung als Vollkreise dargestellt.

Bei der Übergabe des aus dem Prozeß mittels Probennehmer und Probenteiler herausgeführten Analysenprobenstromes 3, kann es nötig sein, an der Übergabeöffnung 40 eine Absaugvorrichtung zur Entstaubung vorzusehen. Eine solche Anordnung ist in Fig. 3 dargestellt. Um das zentrale Übergaberohr 52 ist ein Ansaugstutzen 51 so angeordnet, daß um den Übergabequerschnitt 40 ein einstellbarer Ringspalt 53 entsteht. Mit einem nachgeschalteten Absaugeaggregat 70 wird der zur Entstaubung erforderliche, kleinstmögliche Luftstrom von außen gegen die und quer zur Fallrichtung des Analysenprobenstromes 3 durch ein Filter 85 angesaugt.

Für Einsatzfälle, bei denen z.B. aufgrund wechselnder Hauptmasseströme 1 eine Anpassung des Analyseprobenstromes 3 vorgesehen werden muß, ist der Öffnungswinkel ß veränderlich und z.B. nach Maßgabe eines Massenstromgebers 8 einstellbar. Der Massenstrom- Istwert führt über eine Signalleitung 79 zur Einstellung des Öffnungswinkels ß.

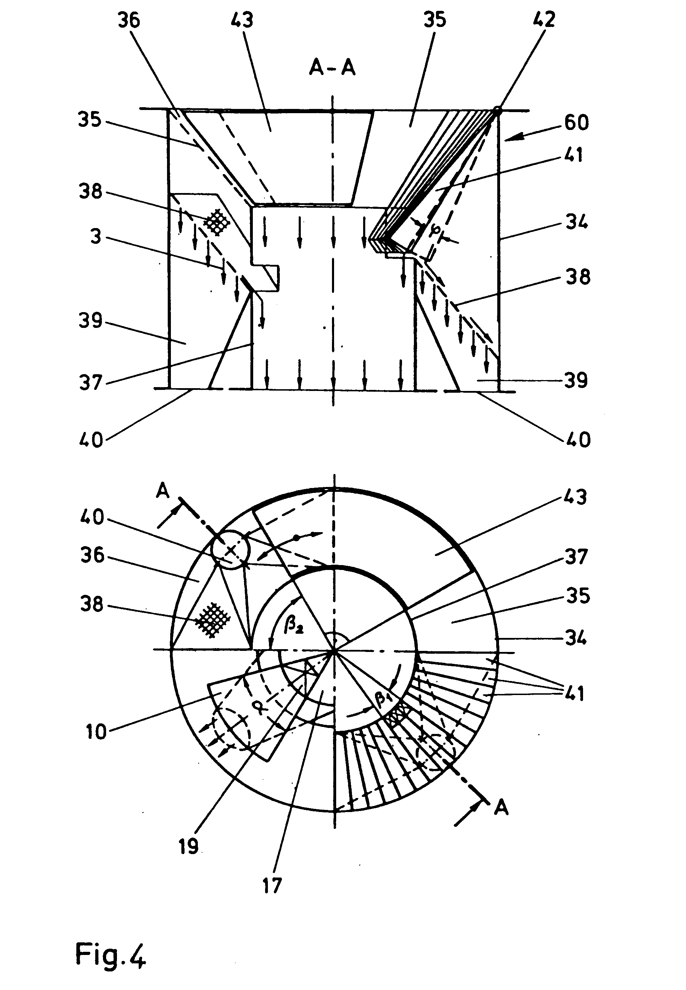

Zwei Ausführungsformen veränderlicher Einstellmöglichkeiten für den Entnahmeöffnungwinkel ß sind in Fig. 4 dargestellt. In der unteren Bildhälfte ist in der Draufsicht im linken unteren Quadranten die Draufsicht-Darstellung der Fig. 2, Sektor AMB, wiederholt. Man erkennt Entnahmeöffnung 10, Auslaßöffnung 19 und Ablenkkonus 17.

Im unteren rechten Quadranten ist als erste Ausführungsform die Einstellung von $\beta_1$ mit Klappschurren 41 gezeigt. In der Darstellung sind die drei offenen Schurren an den Durchtrittsöffnungen ausgekreuzt. Im Schnitt A-A erkennt man in Fig. 4 oben rechts die Dreieckskontur der im Querschnitt U-förmigen Klappschurren 41. Die geöffnete Position ist gestrichelt dargestellt. In geschlossener Stellung liegt die offene Oberkante in der Ebene des Teilertrichters 35. Beim Öffnen um einen obenliegenden Drehpunkt 42 schwenkt die Klappschurre 41 um den Winkel $\phi$ aus der Schließposition. Der Analysenprobenstrom 3 gelangt dann über das Sicherheitssieb 38 in das Probenabgaberohr 39 zur Übergabeöffnung 40. Bei geschlossenen Klappschurren 41 gelangt der Restteilstrom 4 zurück zum Hauptmassestrom 6 in das Rückleitrohr 37.

Insgesamt sind 15 Klappschurren 41 in einem $90°$-Segment vorgesehen, so daß bei $\beta_{1max} = 90°$ bis zu 25 % des entnommenen Teilstromes 2 die Probenteilung passieren können. Wenn nur eine Klappschurre 41 geöffnet ist, beträgt $\beta_{1min} = 6°$, d.h. nur 1,67 % des entnommenen Teilstromes 2 werden für die weitere Bearbeitung als Analysenprobenstrom 3 weitergeleitet.

Der Vorteil der Schurrenanordnung liegt in der einfachen Kombinierbarkeit mit digitalen Steuervorrichtungen, bei denen durch einfache Ja/Nein-Entscheidungen das Öffnen bzw. Schließen einzelner Klappschurren 41 diskret geschaltet werden kann.

Eine Lösung für eine stufenlose Einstellung des Analysenprobenstroms zeigen die beiden oberen Quadranten des unteren Teils der Fig. 4. Der Probenteiler-Öffnungswinkel $\beta_2$ wird hier durch die Verdrehung eines Trichtersegmentes 43 eingestellt. Dieses ist parallel über oder unter dem Teilertrichter 35 angeordnet und kann die über $90°$ unterbrochene Teileröffnung 36 des Teilertrichters 35 partiell oder ganz abdecken. Der durch die verbleibende Teileröffnung 36 ($\beta_2$) entnommene Teilstrom fällt, wie links in Schnitt A-A erkennbar, wieder auf das Sicherheitssieb 38, bevor es als Analysenprobenstrom 3 in das Probenabgaberohr 39 zur Übergabeöffnung 40 gelangt.

Das so eingestellte Massenstromverhältnis von Analysenprobenstrom $\dot{M}_A$ zu Hauptstrom $\dot{M}_H$ bestimmt sich zu

$$\dot{M}_A/\dot{M}_H = (\alpha \cdot \beta) / (360°)^2$$

wobei $\alpha$ konstruktiv fest so vorzuwählen ist, daß mit der Variation $0 < \beta < 90°$ die zu erwartenden Massenstromänderungen $\Delta \dot{M}_H$ des Hauptstromes $\dot{M}_H$ beherrscht werden können.

Eine modifizierte Ausführungsform eines kombinierten in-line Probenehmers mit einem nachgeschalteten Probenteiler zeigt Fig. 5.

Modifiziert sind dabei sowohl der Probennehmer 9 als auch der Probenteiler 60. Der Probenteiler ist hier ein über den ganzen Umfang angeordneter, rotationssymmetrischer Riffelteiler. Der aus dem Verteilerrohr 20 außermittig ausfließende Teilmassenstrom 2 wird längs der gesamten Umlaufbahn durch einen feststehenden Fächerkragen des Riffelteilers in gleichgroße aufeinanderfolgende Einzelproben 5 zerlegt.

Die horizontal aufeinanderfolgenden Fächer des Riffelteilers sind so angeordnet, daß alle Einzelproben, die auf einen nach innen geneigten langen Fächerboden 44 abgeworfen werden, in den Hauptstrom zurückgeführt und alle Einzelproben, die auf einen nach außen geneigten, kurzen Fächerboden 45 fallen, als geteilter Analysenprobenstrom 3 abgezogen werden. So gelangt jede zweite Einzelprobe 5 zum Analysenprobenstrom 3. Das damit realisierte feste Teilungsverhältnis von 1:2 ist unempfindlich gegen Massenstromschwankungen aus der Entnahmeöffnung 10, da innerhalb einer Umdrehung durch die Integration über den gesamten Querschnitt sektorale Über- bzw. Unterbelastungen sofort ausgeglichen werden. Aus diesem Grund ist es bei dieser Anordnung nicht erforderlich, die Entnahmeöffnung 10 mit einer anderen Winkelgeschwindigkeit zu betreiben als das nachgeordnete Verteilerrohr 20 für die Übergabe zum Probenteiler. Entsprechend einfacher fällt die konstruktive Lösung und der Antrieb im Probenehmer aus. Ablenkkonus 17, Mündungstrichter 18 mit Auslaßöffnung 19 und Verteilerrohr 20 sind zu einer Baueinheit verbunden, die mit dem Motor 14 über ein Getriebe 15' mit konstanter Winkelgeschwindigkeit $\omega$ angetrieben wird. Der Antrieb über den Motor 14 erfolgt hier alternativ von unten, wo er gemeinsam mit dem Getriebe 15' unter einer mitrotierenden Kegelhaube 46 geschützt angeordnet ist. Die angetriebenen Elemente 17, 18, 20, 22, 23, 25, 26 und 46 sind auf dem Lagerblock 29 zentral drehbar gelagert.

Alle Einzelproben 5, die über die kurzen Fächerböden 45 abgezogen werden, fallen aus dem Gehäuse 34 des Probenteilers in einen angeflanschten Sammelbehälter 47 und treffen auf der den Probenabgaberohren 39 und der einem Spritzkornauslaufschacht 48 gegenüberliegenden Seite auf das geneigte Sicherheitssieb 38. Zur Vermeidung von Kurzschlußströmungen werden die Teilströme der Einzelproben aus dem gegenüberliegenden Halbraum über eine Ablenkschurre 49 in die Mitte des Sammelbehälters 47 zurückgeleitet und dort ebenfalls auf das Sicherheitssieb 38 gelenkt. Dadurch wird sichergestellt, daß für alle Teilmassenströme eine genügend lange Siebstrecke wirksam werden kann bevor das abgetrennte Überkorn oder Spritzkorn durch den Spritzkornauslaufschacht 48 und der Siebdurchgang zur weiteren Verwendung über das Probenabgaberohr 39 als Analysenprobenstrom 3 abgezogen wird. Mit einem zusätzlichen Verbindungselement 74 kann über einen Rücklaufschacht 75 das Überkorn unmittelbar in den Produkthauptstrom zurückgeführt bzw. mit einer Weiche 76 über einen Auslaufstutzen 77 zur Kontrolle aus dem Prozess genommen werden.

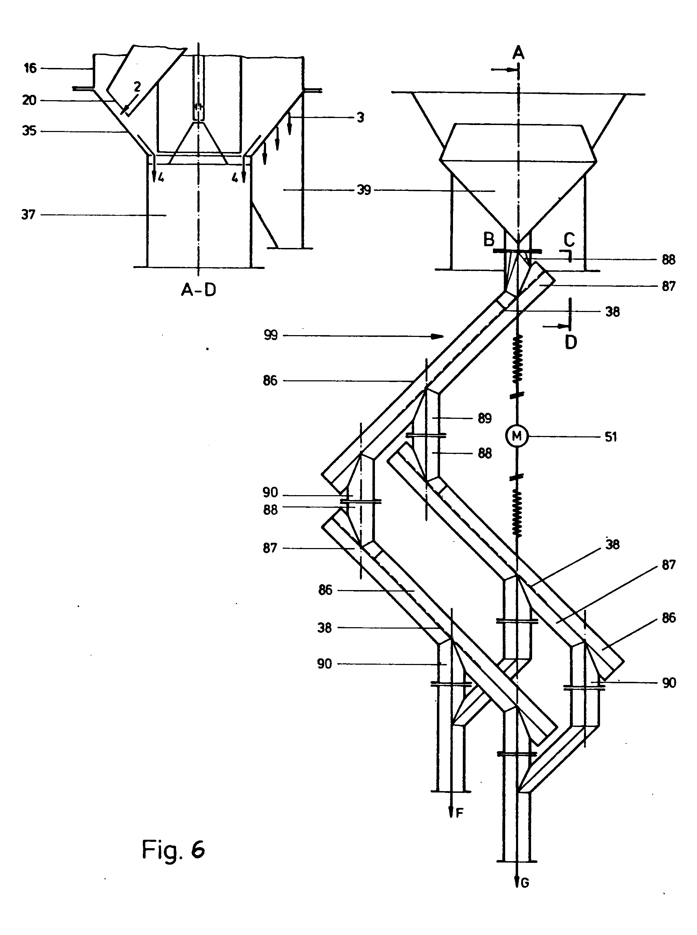

Eine andere, außerhalb des Probennehmer- und -teilergehäuses 16, 60 liegende Ausgestaltung der Sicherheitsabsiebung ist in Fig. 6 dargestellt. Bei wechselnden Spritzkornanteilen kann es vorkommen, daß es mit der in Fig. 5 gezeigten Anordnung des Sicherheitssiebes 38 nicht ausreichend gelingt, Verunreinigungen oder Partikel außerhalb des Meßbereiches abzutrennen. Eine flexible Anpassung, sowohl an wechselnde Mengen, als auch an unterschiedliche Trenngrenzen erlaubt die in Fig. 6 dargestellte Kaskadenschaltung der einfachen Klassierelemente 99. Jedes Element besteht aus zwei Halbschalen. Eine obere Halbschale 86 hat an ihrem oberen Ende einen Zulaufstutzen 88, der beim obersten Klassierelement 99 in der Seitenansicht in Fig. 6 direkt an den Auslaufstutzen 39 des Probenteilers 60 angeflanscht wird.

Der so aus dem Probenteiler übernommene Analysenprobenstrom 3, der z.B. noch Spritzkornanteile 7 enthält, fällt durch den Zulaufstutzen 88 direkt auf das Sicherheitssieb 38. Dieses Sieb ist zwischen zwei Halbschalen 86 und 87 eingespannt und so dimensioniert, daß die Spritzkornanteile als Grobgut vom Sieb zurückgehalten werden, während der analysierbare Probenstrom 3 als Feingut durchgeht. Das Grobgut läuft über das Sicherheitssieb 38 ab und gelangt im unteren Teil eines Klassierelementes 99 in den Grobgut-Auslaufstutzen 90 einer unteren Halbschale 87. Das Sicherheitssieb 38 selbst ist kürzer als das Klassierelement 99 und wird so lang ausgebildet, daß ein weiter oben liegender Feingut-Auslaufstutzen 89 der unteren Halbschale 87 vollständig abgedeckt ist und Kurzschlußströmungen gerade vermieden werden. Die Länge und Steilheit der Klassierelemente bestimmt sich einerseits aus der zulässigen Verweildauer, die möglichst kurz sein soll, und andererseits aus der erforderlichen Trennschärfe. Daran und an wechselnde Prozeßverhältnisse kann man sich mit derart ausgebildeten Klassierelementen 99 leicht anpassen, indem jetzt an die Auslaufstutzen 89 und 90 der ersten unteren Halbschale 87 baugleiche Klassierelemente 99 angeschlossen werden. Dies führt sowohl zu einer Nachsiebung des Fein- als auch des Grobgutes der ersten Stufe. Dabei kann, je nach Aufgabenstellung, in diesen nachgeschalteten Stufen diesselbe oder eine entsprechend angepaßte Siebmaschenweite eingesetzt werden. In Fig. 6 werden das jeweilige Feingut der nachgeschalteten Klassierelemente zum Gesamtfeingut F bzw. dem Analysenprobenstrom 3 ohne Spritzkorn und das jeweilige Grobgut zum Gesamt-Grobgut G bzw. zur Menge der Spritzkornanteile mittels geeigneter Y-Rohrstücke zusammengefaßt.

Neben der dargestellten und beschriebenen Schaltungsvariante sind beliebige andere Kombinationen der baugleichen Klassierelemente 99 denkbar. Eine sehr trennscharfe Eliminierung des Spritzkornes würde beispielsweise mit einer mehrfachen Hintereinanderschaltung von Klassierelementen jeweils am unteren Grobgutauslauf erreichbar sein, während das Feingut ohne weitere Nachklassierung aus der Zusammenfassung der jeweiligen Durchgänge an den oberen Feingutausläufen zusammengesetzt sein könnte. Entsprechend umgekehrt wäre gezielt ein trennscharfes Feingut herstellbar.

Eine andere Schaltungsvariante könnte mit dem Ziel aufgebaut werden, eine Mehrfachklassierung durchzuführen. Dazu wären die Maschenweiten des Sicherheitssiebs 38 bei den aufeinanderfolgenden Klassierelementen entsprechend abgestimmt abzustufen.

Die Maschenweiten hinter den Feingut-Ausläufen müßten zunehmend kleiner werden und die Maschenweiten hinter den Grobgut-Ausläufen entsprechend größer. Eine Mehrfachklassierung hinter der Probennahme wäre zum Beispiel zur gravimetrischen Analyse des Verlaufes einer Partikelgrößenverteilung außerhalb des Meßbereiches eines nachgeschalteten Probenanalysators einsetzbar.

Varianten zur gleichzeitigen Herstellung trennscharfer Klassierschnitte und zur Mehrfachklassierung sind auch kombiniert hintereinander und parallel schaltbar.

Zur Unterstützung der Siebung wird z.B. ein zweiseitig wirkender Vibrationsantrieb 51 zwischen den Klassierelementen eingebaut.

Teilschnitt A-D in Fig. 6 zeigt die Zuordnung der Siebkaskade zu den Darstellungen in den Figuren 2, 3 und 4.

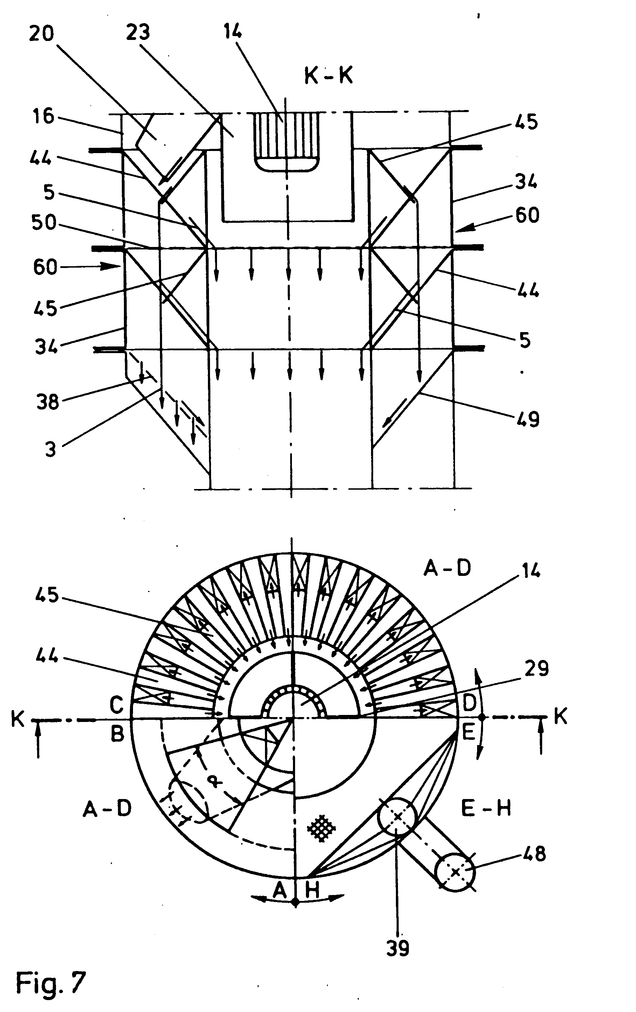

In Fig. 7 ist in Teilschnitten die Draufsicht A-D und ein modifizierter Längsschnitt K-K zu Fig. 5 dargestellt.

Im linken unteren Quadranten ist im Sektor AB die Draufsichtdarstellung von Fig. 2 und Fig. 4 zur Orientierung wiederholt. Die beiden obenliegenden Quadranten CD zeigen den Fächerkragen des Riffelteilers mit den kurzen Fächerböden 45 und den langen Fächerböden 44, über die die Einzelproben 5 in den Produkthauptstrom 1 zurückgeleitet werden.

Von den kurzen Fächerböden 45 fallen die Einzelproben 5 durch die ausgekreuzten Öffnungstrapeze in Schwerkraftrichtung nach unten. Im Schnitt K-K ist dazu ergänzend die Variante dargestellt, mit der das Probenteilungsverhältnis angepaßt werden kann. Der ersten Teilungsstufe aus den Elementen 34, 44 und 45 ist eine zweite, baugleiche Riffelteileranordnung nachgeschaltet. Eine homogenisierende Querverteilung über den Querschnitt wird durch einen durchlässigen Zwischenboden 50 bewirkt. Sicherheitshalber sind die Baueinheiten der Riffelteiler gegeneinander um eine halbe Fächerbreite verdreht angeordnet. Es läßt sich diese Hintereinanderschaltung k-fach wiederholen und damit ein Probenteilungsverhältnis von $1:2^k$ einstellen. Die Anpassung des erforderlichen Analysenprobenstromes 3 erfolgt in dieser Kombination durch die Stufenzahl k und den Entnahmewinkel α entsprechend:

$$\dot{M}_A/\dot{M}_H = (\alpha/360°) \cdot (1/2^k) = \alpha/(360° \cdot 2^k),$$

wobei über die Variation von k (nur ganzzahlig) alle Quoten möglich sind. Die Anordnung ist aber nicht verwendbar, wenn eine Anpassung an schwankende oder geänderte Hauptmassenströme im Prozeßbetrieb erforderlich ist.

Im Quadranten EH der Draufsicht AD ist die Anordnung des Spritzkornauslaufschachtes 48 und des Probenabgaberohrs 39 dargestellt.

## Patentansprüche

1. Vorrichtung zur Probenahme aus Strömen disperser Produkte entweder aus Transportleitungen oder an Produktübergabestellen und zur Probenteilung in einen für eine anschließende in-line Probenanalyse geeigneten Analysenprobenstrom

   - mit einem Probenehmer zur Probeentnahme aus einer rotationssymmetrischen Produkthauptstrom-Transportleitung zur Gewinnung einer Teilprobe wobei
   - ein drehangetriebener Pobenehmer (9) in der Produkt-Transportleitung für die Gewinnung eines von bis zu 1:100 des Produkthauptstroms (1) betragenden Teilstroms (2) aus dem Produkthauptstrom am Eingang einer Entnahmeleitung (30) angeordnet ist und eine Gesamtquerschnittsfläche besitzt, die die Form wenigstens eines Kreissektors mit einem Öffnungswinkel α aufweist und wobei der wenigstens eine Kreissektor mit der Sektorspitze um die Mittelachse der Produkthauptstrom-Transportleitung drehbar ist und wobei
   - der Probenehmer den Teilstrom (2) einer Austrittsöffnung und damit der Entnahmeleitung (39) zuführt, an deren Ende ein Probenteiler (60) zur Teilung des Teilstroms (2) in einen Restteilstrom (4) und einen Analysenprobenstrom (3) angeordnet ist, welcher wiederum unmittelbar einem Analysegerät zuführbar ist, und wobei der Probenteiler (60) den Teilstrom (2) bis zu 1:1000 in den Analysenstrom (3) teilt.

2. Vorrichtung nach Anspruch 1, dadurch **gekennzeichnet,** daß der Probenteiler (60) einen sich in Strömungsrichtung verengenden Teilertrichter (35) mit wenigstens einer, insbesondere kreissektorförmigen Teileröffnung (36) mit dem Durchlaßöffnungswinkel (β) aufweist, auf den der Teilstrom (2) außermittig, um dessen Achse drehend aufgebbar ist und an dessen zentraler Auslaßöffnung (35') sich ein Rückleitrohr (37) zur Ableitung des Restteilstroms (4) und an dessen Teileröffnung (36) sich ein Probenabgaberohr (39) für den Analysenprobenstrom (3) anschließen.

3. Vorrichtung nach Anspruch 2, dadurch **gekennzeichnet,** daß der Teileröffnung (36) ein Sicherheitssieb (38) zur Rückhaltung von Spritz- oder Überkorn bzw. nicht analysierbarem groben Korn nachgeordnet ist, das dieses Korn insbesondere in das Rückleitrohr (37) ableitet.

4. Vorrichtung nach Anspruch 1, dadurch gekennzeichnet, daß im Drehzentrum der sektorförmigen Entnahmeöffnung (10) ein Abweiskonus (59) vorgesehen ist, dessen Basis so groß ausgeführt ist, daß die kleinste nahe beim Drehpunkt liegende Entnahmeöffnung erheblich größer als die gröbsten Partikel im Produkthauptstrom (1) ist.

5. Vorrichtung nach Anspruch 1, dadurch gekennzeichnet, daß vor der Entnahmeöffnung (10) ein Zwischensieb (61) zur Vergleichmäßigung des zulaufenden Produkthauptstroms (1) vorgesehen ist.

6. Vorrichtung nach einem der Ansprüche 1 bis 5, dadurch **gekennzeichnet,** daß der Entnahmeöffnungswinkel (α) der Entnahmeöffnung (10) des Entnahmekopfs (12) und/oder der Durchlaßöffnungswinkel (β) des Teilertrichters (35) veränderbar ist (mittels Trichtersegment (43) der Teileröffnung (36)).

7. Vorrichtung nach einem der Ansprüche 1 bis 6, dadurch **gekennzeichnet,**

daß der Entnahmekopf (12) des Probenehmers (9) mit gegenüber dem Probenteilerrotor des Probenteilers (60) unterschiedlicher Drehgeschwindigkeit antreibbar ist.

8. Vorrichtung nach Anspruch 7,
dadurch **gekennzeichnet,**
daß der Drehantrieb (14) des Entnahmekopfs (12) des Probenehmers (9) drehzahlveränderbar ausgebildet ist.

9. Vorrichtung nach einem der Ansprüche 7 oder 8,
dadurch **gekennzeichnet,**
daß ein dem Probenehmer (9) nachgeordnetes und den Probenteiler (60) speisendes Verteilerrohr (20) mit veränderbarer Drehzahl drehantreibbar ist.

10. Vorrichtung nach einem der Ansprüche 6 bis 8,
dadurch **gekennzeichnet,**
daß der Probenteiler-Durchlaßöffnungswinkel ($\beta$) auf einen Ringsektor durch die Verstellung eines über oder unter der Teileröffnung (36) angeordneten Trichtersegments (43) zur teilweisen oder ganzen Abdeckung der Teileröffnung (36) zwischen 0° und 90°, höchstens 180°, veränderbar ist.

11. Vorrichtung nach Anspruch 1,
dadurch **gekennzeichnet,**
daß der Probenteiler (60) einen Teilertrichter (35) mit auf einen Kreisbogen in einen Winkelbereich bis 90°, höchstens 180°, bis zu 32 angeordnete Klappschurren (41) aufweist, die einzeln oder gruppenweise zur Einstellung des Durchlaßöffnungswinkels ($\phi$) geöffnet oder geschlossen werden können.

12. Vorrichtung nach Anspruch 1 oder 7,
dadurch **gekennzeichnet,**
daß der Probenteiler (60) als isokinetischer Absaug-Probenteiler ausgebildet ist und zur Einstellung eines Durchlaßöffnungswinkels ($\beta$) in seinen drehantreibbaren zylindrischen Kopfstück (31) und in seinem nachgeordneten länglichen zylindrischen Stator (32) feststehende sektorförmige Leitkanäle (33) ausgebildet sind und Teilströme hinter dem Stator (32) in einem nachgeordneten Konzentrator (71) einzeln oder gruppenweise zusammenfaßbar sind.

13. Vorrichtung nach Anspruch 6,
dadurch **gekennzeichnet,**
daß der Entnahmekopf (12) des Probenehmers (9) gegen einen baugleichen Entnahmekopf mit anderer Entnahmeöffnung (10) auswechselbar ist.

14. Vorrichtung nach einen der Ansprüche 1 bis 13,
dadurch **gekennzeichnet,**
daß der Entnahmekopf (12) symmetrisch oder asymmetrisch angeordnete sektorförmige Entnahmeöffnungen mit gleichen oder unterschiedlichen Entnahmeöffnungswinkeln ($\alpha_1$, $\alpha_2$) aufweist.

15. Vorrichtung nach Anspruch 1,
dadurch **gekennzeichnet,**
daß der Probenteiler (60) aus k hintereinandergeschalteten Riffelteilern mit je einen Durchlaßöffnungswinkel ($\beta$) von 180° gebildet ist, die die Teilung des Teilstroms $\dot{M}_A(2)$ im Verhältnis zum Hauptstrom $\dot{M}_H(1)$ entsprechend

$$\dot{M}_A/\dot{M}_H = (\alpha/360°) \cdot (1/2^k)$$

bewirken.

16. Vorrichtung nach einem der Ansprüche 1 bis 15,
dadurch **gekennzeichnet,**
daß der Probenteiler (60) vor seinem Probenabgaberohr (39) ein geneigtes Sicherheitssieb (38) zur Abtrennung von störenden oder nicht analysierbaren groben Partikeln aus dem Analyseprobenstrom (3) aufweist.

17. Vorrichtung nach Anspruch 16,
dadurch gekennzeichnet,
daß zur Sicherheitsabsiebung eine Folge von rohrförmigen Klassierelementen (99) aus je zwei Halbschalen (86, 87) mit eingebautem Sieb (38) vorgesehen ist.

18. Vorrichtung nach Anspruch 17,
dadurch gekennzeichnet,
daß die obere Halbschale (86) am oberen Ende einem Aufgabestutzen (88) aufweist.

19. Vorrichtung nach Anspruch 17,
dadurch gekennzeichnet,
daß die untere Halbschale (87) am unteren Ende zwei Auslaufstutzen (89, 90) aufweist, von denen der Auslaufstutzen (89) für den Feingutaustrag oberhalb des Auslaufstutzens (90) für den Grobgutaustrag sitzt.

20. Vorrichtung nach Anspruch 17 und 18,
dadurch gekennzeichnet,
daß das Sieb (38) zwischen den Halbschalen (86, 87) gerade so lang ist, daß es den in der unteren Halbschale (87) obenliegenden Auslaufstutzen (89) für den Feingutaustrag überdeckt.

21. Vorrichtung nach Anspruch 16,
dadurch **gekennzeichnet,**
daß mit dem Sicherheitssieb (38) wenigstens eine Ablenkschurre (49) für die Analysenprobenteilströme (5) derart zusammenwirkt, daß diese alle eine genügend lange Siebstrecke zur sicheren Abtrennung vorfinden.

22. Vorrichtung nach einem der Ansprüche 1 bis 7,
dadurch **gekennzeichnet,**
daß Probennehmer (9) und/oder Probenteiler (60) hinter Fallschächten oder -rohren zur Unterstützung der Partikelbewegung auf Wand- und Siebflächen mittels eines Vibrators (51) in Vibrationen versetzbar sind.

23. Verfahren zur Probenahme aus Strömen disperser Produkte entweder aus Transportleitungen oder an Produktübergabestellen und zur Probenteilung in einen für eine anschließende Probenanalyse geeigneten Analysenprobenstrom, unter Verwendung der Vorrichtung nach Anspruch 1,
- mit einem Probenehmer zur Probeentnahme aus einer rotationssymmetrischen Produkthauptstrom-Transportleitung zur Gewinnung einer Teilprobe wobei
- ein drehangetriebener Probenehmer (9) in der Produkt-Transportleitung für die Gewinnung eines von bis zu 1:100 des Produkthauptstroms (1) betragenden Teilstroms (2) aus dem Produkthauptstrom am Eingang einer Entnahmeleitung (300 angeordnet ist und eine Gesamtquerschnittfläche besitzt, die die Form wenigstens eines Kreissektors mit einem Öffnungswinkel $\alpha$ aufweist und wobei der wenigstens eine Kreissektor mit der Sektorspitze um die Mittelachse der Produkthauptstrom-Transportleitung drehbar ist und wobei
- der Probenehmer den Teilstrom (2) einer Austrittsöffnung und damit der Entnahmeleitung (39) zuführt, an deren Ende ein Probenteiler (60) zur Teilung des Teilstroms (2) in einen Restteilstrom (4) und einen Analysenprobenstrom (3) angeordnet ist, welcher wiederum unmittelbar einem Analysegerät zuführbar ist, und wobei der Probenteiler (60) den Teilstrom (2) bis zu 1:1000 in den Analysenstrom (3) teilt.

24. Verfahren nach Anspruch 23,
dadurch **gekennzeichnet,**

daß bei Produktions-Prozessen mit wechselnden Produkthauptströmen $\dot{M}_H$ eine erste Anpassung an den wechselnden Produkthauptstrom $\dot{M}_H$ an der Stelle der Probeentnahme erfolgt und die Probenteilung derart proportional der ersten Anpassung als zweite Anpassung einstellbar und/oder veränderlich durchgeführt wird, daß der Analysenprobenstrom $\dot{M}_A$ proportional zum Produkthauptstrom $\dot{M}_H$ erfolgt.

25. Verfahren nach Anspruch 23 oder 24,
dadurch **gekennzeichnet,**
daß bei transportmittelfreiem Produkthauptstrom an einer Produktübergabestelle Probenahme und Probenteilung in einer rotationssymmetrischen vertikalen Transportleitung (Fallschächten) in Schwerkraftrichtung nacheinander erfolgen.

26. Verfahren nach Anspruch 23 oder 24,
dadurch **gekennzeichnet,**
daß aus einer rotationssymmetrischen Transportleitung die Probenahme von in einem Fluid-Trägerstrom geführten dispersen Produkten durch Absaugung eines repräsentativen Fluid-Teilstroms durch eine rotierende Entnahmeöffnung erfolgt und proportional zu den isokinetischen Bedingungen an der Stelle der Probeentnahme eingestellt oder on-line nachgeregelt wird.

**Claims**

1. Apparatus for sampling from flows of disperse products either from transport conduits or at product transfer points and for sample splitting into an analysis sample flow suitable for a subsequent in-line sample analysis, said apparatus comprising
a sampler for sampling from a rotational symmetrical product main flow transport conduit for obtaining a sub-sample, whereby
in the product transport conduit, at the inlet to a sampling pipe (30), a rotationally driven sampler (9) is mounted for obtaining from the product main flow a sub-flow (2) in a ratio of up to 1:100 to the product main flow (1) and has a total cross-sectional area in the form of at least one circle sector with an aperture angle $\alpha$, and wherein the at least one circle sector is rotatable with the sector point about the central axis of the product main flow transport conduit, and whereby
the sampler directs the sub-flow (2) to an outlet opening and thus to the sampling pipe (39) at the extremity of which a sample splitter (60) is arranged for dividing the sub-flow (2) into a residual sub-flow (4) and an analysis sample flow (3), the latter in its turn being capable of being directly led to an analyzer, and wherein the sample splitter (60) splits the sub-flow (2) in a ratio of up to 1:1000 with regard to the analysis flow (3).

2. Apparatus according to claim 1, **characterized** in that the sample splitter (60) has a sampler funnel (35) tapering in the direction of flow and being provided with at least one, especially circle sector shaped sampler opening (36) with the passage opening angle ($\beta$), the sub-flow (2) being capable of being charged upon it in an off-centre position and turning about its axis, and its central outlet opening (35') has connected thereto a return pipe (37) for returning the residual sub-flow (4), and its splitter opening (36) has connected thereto a sample dispensing pipe (39) for the analysis sample flow (3).

3. Apparatus according to claim 2, **characterized** in that downstream of the splitter opening (36) a safety sieve (38) is arranged for inhibiting the passage respectively of grits or oversize particles or of non-analyzable coarse particles, said sieve diverting these particles especially into said return pipe (37).

4. Apparatus according to claim 1, characterized in that a rejector cone (59) is provided in the rotational centre of the circle sector shaped withdrawal opening (10), the basis of which is made so large that the smallest withdrawal aperture, adjacent the rotational centre, is considerably larger than the largest particle in the product main flow (1).

5. Apparatus according to claim 1, characterized in that an intermediate sieve (61) is provided upstream of the withdrawal opening (10) for making the oncoming product main flow (1) more uniform.

6. Apparatus according to any of claims 1 to 5, **characterized** in that the angle ($\alpha$) of the withdrawal opening (10) of the sampler head (12) and/or the passage opening angle ($\beta$) of the splitter funnel (35) are/is variable (by means of funnel segment (43) of the splitter opening (36)).

7. Apparatus according to any of claims 1 to 6,

**characterized** in that the sampler head (12) of the sampler (9) is capable of being driven with a different rotational speed than the sample splitter rotor of the sample splitter (60).

8. Apparatus according to claim 7, **characterized** in that the rotational drive means (14) of the sampler head (12) of the sampler (9) is designed to have variable numbers of revolutions.

9. Apparatus according to any of claims 7 or 8, **characterized** in that a distributor pipe (20) which is arranged downstream of the sampler (9) and feeds the sample splitter (60) is capable of being rotationally driven at variable numbers of revolutions.

10. Apparatus according to any of claims 6 to 8, characterized in that the passage opening angle ($\beta$) of the sample splitter is capable of being varied in the range of from 0° to 90°, 180° at the most, within a ring sector by adjusting a funnel segment (43), which is arranged above or beneath the sampler opening (36), for covering the sampler opening (36) in part or in toto.

11. Apparatus according to claim 1, **characterized** in that the sample splitter (60) has a splitter funnel (35) provided with up to 32 trap chutes (41) arranged on an arc of a circle within an angular range up to 90°, 180° at the most, which are capable of being opened or closed individually or by sets for adjusting the passage opening angle ($\phi$).

12. Apparatus according to claim 1 or 7, **characterized** in that the sampler (60) is designed as an isokinetic suction sampler, and in that for adjusting a passage opening angle ($\beta$) fixed sector-shaped guide passages (33) are formed in its rotationally drivable cylindrical head piece (31) and in its elongated cylindrical downstream stator (32), and in that sub-flows may be combined individually or by sets after the stator (32) in a downstream concentrator (71).

13. Apparatus according to claim 6, **characterized** in that the sampler head (12) of the sampler (9) is replaceable against a constructionally identical sampler head having another withdrawal opening (10).

14. Apparatus according to any of claims 1 to 13, **characterized** in that the sampler head (12) includes symmetrically or asymmetrically arranged sector-shaped withdrawal openings formed with identical or different withdrawal opening angles ($\alpha_1$, $\alpha_2$).

15. Apparatus according to claim 1, characterized in that the sample splitter (60) is composed of k serially arranged chute splitters each having a passage opening angle ($\beta$) of 180°, said chute splitters causing the splitting of the subflow $\dot{M}_A$ (2) in a ratio with the main flow $\dot{M}_H$ (1) as given by

$$\dot{M}_A/\dot{M}_H = (\alpha/360°) \cdot (1/2^k).$$

16. Apparatus according to any of claims 1 to 15, **characterized** in that the sample splitter (60) includes an inclined safety sieve (38), arranged upstream of its sample dispensing pipe (39), for separating disturbing/interfering or non-analyzable coarse particles from the analysis sample flow (3).

17. Apparatus according to claim 16, characterized in that a series of tubular classifying elements (99), each including two half shells (86, 87) with an integral sieve (38), are provided for safety screening.

18. Apparatus according to claim 17, characterized in that the upper half shell (86) includes at its upper end a feeding connection piece (88).

19. Apparatus according to claim 17, characterized in that the lower half shell (87) includes at its lower end two discharge pipe pieces (89, 90) of which the discharge pipe piece (89) for discharging fine material is arranged above the discharge pipe piece (90) for discharging coarse material.

20. Apparatus according to claims 17 and 18, characterized in that the sieve (38) between the half shells (86, 87) has a length exactly sufficient to cover the upper discharge pipe piece (89) for discharging fine material in the lower half shell (87).

21. Apparatus according to claim 16, **characterized** in that at least one deflection chute (49) for the analysis sample sub-flows (5a) is cooperating with the safety sieve (38) in such a way that a sufficiently great screening length is available for them all together to assure positive separation.

22. Apparatus according to any of claims 1 to 7, **characterized** in that the sampler (9) and/or the sample splitter (60), when arranged downstream of fall shafts or fall pipes, are/is capable of being vibrated by means of a vibrator (51) in order to encourage the movement of particles across wall and sieve faces.

23. Method for sampling from flows of disperse products either from transport conduits or at product transfer points and for sample splitting into an analysis sample flow suitable for a subsequent sample analysis, using the apparatus according to claim 1, said apparatus comprising

a sampler for sampling from a rotational symmetrical product main flow transport conduit for obtaining a sub-sample, whereby

in the product transport conduit, at the inlet to a sampling pipe (30), a rotationally driven sampler (9) is mounted for obtaining from the product main flow a sub-flow (2) in a ratio of up to 1:100 to the product main flow (1) and has a total cross-sectional area in the form of at least one circle sector with an aperture angle $\alpha$, and wherein the at least one circle sector is rotatable with the sector point about the central axis of the product main flow transport conduit, and whereby

the sampler directs the sub-flow (2) to an outlet opening and thus to the sampling pipe (39) at the extremity of which a sample splitter (60) is arranged for dividing the sub-flow (2) into a residual sub-flow (4) and an analysis sample flow (3), the latter in its turn being capable of being directly led to an analyzer, and wherein the sample splitter (60) splits the sub-flow (2) in a ratio of up to 1:1000 with regard to the analysis flow (3).

24. Method according to claim 23, **characterized** in that in production processes where product main flows $\dot{M}_H$ are changing, a first adaptation to the changing product main flow $\dot{M}_H$ is made at the point where the first sampling is effected, and in that the sample splitting is effected in a second adaptation proportionally to the first adaptation in such an adjustable and/or variable manner that the analysis sample flow $\dot{M}_A$ is proportional to the product main flow $\dot{M}_H$.

**25.** Method according to claim 23 or 24, **characterized** in that in a product main flow without transport media, sampling and sample splitting are effected one after the other at a product transfer point within a rotationally symmetrical vertical transport conduit (fall shafts) in the direction of gravity.

**26.** Method according to claim 23 or 24, **characterized** in that when disperse products are carried in a rotational symmetrical transport conduit in a fluid carrier flow, the sampling is made by suction extraction of a representative fluid subflow through a rotating withdrawal opening and is set proportionally to the isokinetic conditions existing at the point of sampling or is subsequently adjusted on an on-line basis.

**Revendications**

**1.** Dispositif pour l'échantillonnage dans des courants de produits en dispersion soit dans des conduites de transport, soit à des endroits de transfert des produits, et pour la division des échantillons en un courant d'échantillons à analyser approprié à une analyse in-line subséquente, ledit dispositif comprenant
- un échantillonneur destiné à prélever un échantillon dans une conduite de transport, à symétrie de révolution, d'un courant principal de produits, aux fins de l'obtention d'un sous-échantillon, en quoi
- un échantillonneur (9), entraîné en rotation, est disposé dans la conduite de transport de produits, au droit de l'entrée d'un tuyau de prélèvement (30), aux fins de l'obtention d'un sous-courant (2) du courant principal de produits, dans une proportion allant jusqu'à 1:100 par rapport au courant principal de produits (1), et ledit échantillonneur comporte une surface totale en coupe transversale qui a la forme d'un secteur de cercle d'un angle d'ouverture α, et dans lequel ce secteur de cercle, au moins, tourne avec la pointe du secteur autour de l'axe central de la conduite de transport du courant principal de produits, et en quoi
- l'échantillonneur dirige le sous-courant (2) vers une ouverture de sortie et, par ainsi, au tuyau de prélèvement (39), à l'extrémité duquel un diviseur d'échantillons (60) est disposé pour la division du sous-courant (2) en un sous-courant résiduel (4) et un courant d'échantillons à analyser (3) qui, à son tour, est capable d'être amené directement à un dispositif d'analyse, et dans lequel le diviseur d'échantillons (60) fait la division du sous-courant (2) en le courant à analyser (3) dans un rapport allant jusqu'à 1:1000.

**2.** Dispositif selon la revendication 1, **caractérisé** en ce que le diviseur d'échantillons (60) a un entonnoir de diviseur (35) se réduisant dans la direction du courant, ayant au moins une entrée de diviseur (36), plus particulièrement de la forme d'un secteur de cercle, avec l'angle d'ouverture de passage (β), sur lequel le sous-courant (2) est capable d'être chargé en dehors de son centre, en tournant autour de son axe, et en ce que sont connectés, à son ouverture de sortie centrale (35'), un tuyau de retour (37) pour évacuer le sous-courant résiduel (4), et à son entrée de diviseur (36), un tuyau de décharge d'échantillons (39) pour le courant d'échantillons à analyser (3).

**3.** Dispositif selon la revendication 2, **caractérisé** en ce que en aval de l'entrée du diviseur (36) une crible de sécurité (38) est disposée pour prévenir le passage, respectivement, de grains mal classés ou de surclassés, ou de grains grossiers pas analysables, ladite crible déviant ces grains plus particulièrement dans le tuyau de retour (37).

**4.** Dispositif selon la revendication 1, caractérisé en ce que dans le centre de rotation de l'ouverture de prélèvement sous la forme de secteur, (10), un cône butoir (59) est prévu dont la base est faite dans une taille telle que la plus petite ouverture de prélèvement, adjacente au point de rotation, est considérablement plus large que les particules les plus grossières du courant principal de produits (1).

**5.** Dispositif selon la revendication 1, caractérisé en ce que en amont de l'ouverture de prélèvement (10), on a prévu une crible intermédiaire (61) destinée à rendre uniforme le courant principal de produits (1) à l'arrivée.

**6.** Dispositif selon l'une quelconque des revendications 1 à 5, **caractérisé** en ce que l'angle d'ouverture (α) de l'ouverture de prélèvement (10) de la tête d'échantillonnage (12) et/ou l'angle d'ouverture de passage (β) de l'entonnoir du diviseur (35) est/sont variable(s) (au moyen d'un segment d'entonnoir (43) de

**7.** Dispositif selon l'une quelconque des revendications 1 à 6,
**caractérisé** en ce que
la tête d'échantillonnage (12) de l'échantillonneur (9) est capable d'être entraînée avec une vitesse de rotation différente par rapport au rotor du diviseur d'échantillons (60).

**8.** Dispositif selon la revendication 7,
**caractérisé** en ce que
le moyen d'entraînement en rotation (14) de la tête d'échantillonnage (12) de l'échantillonneur (9) est conçu pour un nombre de tours variable.

**9.** Dispositif selon l'une des revendications 7 ou 8,
**caractérisé** en ce que
un tuyau de distribution (20), disposé en aval de l'échantillonneur (9) et alimentant le diviseur d'échantillons (60), est capable d'être entraîné en rotation avec un nombre de tours variable.

**10.** Dispositif selon l'une quelconque des revendications 6 à 8,
**caractérisé** en ce que
l'angle d'ouverture de passage ($\beta$) du diviseur d'échantillons est variable entre 0° et 90°, au maximum jusqu'à 180°, le long d'un secteur annulaire par le déplacement d'un segment d'entonnoir (43), disposé au-dessus ou au-dessous de l'entrée du diviseur (36), aux fins du recouvrement, en partie ou en tout, de l'entrée du diviseur (36).

**11.** Dispositif selon la revendication 1,
**caractérisé** en ce que
le diviseur d'échantillons (60) comporte un entonnoir de diviseur (35) avec, au plus, 32 goulottes articulées (41) disposées, sur un arc de cercle, dans une plage angulaire allant jusqu'à 90°, au maximum jusqu'à 180°, lesdites goulottes étant capables d'être ouvertes ou fermées individuellement ou par groupes, en vue du réglage de l'angle d'ouverture de passage ($\phi$).

**12.** Dispositif selon la revendication 1 ou 7,
**caractérisé** en ce que
le diviseur d'échantillons (60) est conçu comme diviseur d'échantillons isocinétique à aspiration, et en ce que, pour le réglage d'un angle d'ouverture de passage ($\beta$), des passages de guidage (33) fixes, sous la forme de secteurs, sont formés dans sa pièce de tête (31) cylindrique, capable d'être entraînée en rotation, et dans son stator cylindrique oblong (32), disposé en aval, et en ce que des sous-courants existant après le stator (32) sont capables d'être combinés individuellement ou par groupes dans un concentrateur (71) disposé en aval.

**13.** Dispositif selon la revendication 6,
**caractérisé** en ce que
la tête d'échantillonnage (12) de l'échantillonneur (9) est remplaçable contre une tête d'échantillonnage de construction pareille ayant une autre ouverture de prélèvement (10).

**14.** Dispositif selon l'une quelconque des revendications 1 à 13,
**caractérisé** en ce que
la tête de prélèvement (12) comporte des ouvertures de prélèvement sous la forme de secteurs, disposées symétriquement ou asymétriquement, ayant des angles d'ouvertures de prélèvement ($\alpha_1$, $\alpha_2$) identiques ou différents.

**15.** Dispositif selon la revendication 1,
**caractérisé** en ce que
le diviseur d'échantillons (60) est constitué de k riffles disposés en série, ayant chacun un angle d'ouverture de passage ($\beta$) de 180°, lesdits riffles effectuant la division du sous-courant $\dot{M}_A$ (2) dans un rapport avec le courant principal $\dot{M}_H$ (1) correspondant à

$$\dot{M}_A / \dot{M}_H = (\alpha/360°) \cdot (1/2^k).$$

**16.** Dispositif selon l'une quelconque des revendications 1 à 15,
**caractérisé** en ce que
le diviseur d'échantillons (60) comporte, en amont de son tuyau de décharge d'échantillons (39), une crible de sécurité (38) inclinée destinée à séparer du courant d'échantillons à analyser (3) des particules grossières gênantes ou pas analysables.

**17.** Dispositif selon la revendication 16,
caractérisé en ce que
l'on a prévu pour le criblage de sécurité une suite d'éléments de classement tubulaires (99), faits chacun de deux demi-coquilles (86, 87) avec crible (38) intégrée.

**18.** Dispositif selon la revendication 17,
caractérisé en ce que
la demi-coquille supérieure (86) comporte à son extrémité supérieure une tubulure de chargement (88).

**19.** Dispositif selon la revendication 17,

caractérisé en ce que

la demi-coquille inférieure (87) comporte à son extrémité inférieure deux tubulures de sortie (89, 90) dont la tubulure de sortie (89) pour l'évacuation des particules fines est disposée a un niveau plus haut que la tubulure de sortie (90) pour l'évacuation des particules grossières.

20. Dispositif selon les revendications 17 et 18, caractérisé en ce que

la crible (38) entre les demi-coquilles (86, 87) a une longueur d'une taille exactement suffisante pour qu'elle recouvre la tubulure de sortie (89) des particules fines, supérieure dans la demi-coquille inférieure (87).

21. Dispositif selon la revendication 16, **caractérisé** en ce que

la crible de sécurité (38) coopère avec au moins une goulotte de déviation (49) pour les sous-courants d'échantillons à analyser (5) de telle sorte que ces derniers passent tous sur une longueur de criblage suffisante pour assurer une bonne séparation.

22. Dispositif selon l'une quelconque des revendications 1 à 7, **caractérisé** en ce que

l'échantillonneur (9) et/ou le diviseur d'échantillons (60), quand il(s) est/sont disposé(s) en aval de puits ou de conduites à gravité, est/sont capable(s) d'être mis en vibrations au moyen d'un vibrateur (51) en vue d'encourager les mouvements des particules sur des faces de paroi et de crible.

23. Procédé pour l'échantillonnage dans des courants de produits en dispersion soit dans des conduites de transport, soit à des endroits de transfert des produits, et pour la division des échantillons en un courant d'échantillons à analyser approprié à une analyse subséquente, en utilisant le dispositif selon la revendication 1, ledit dispositif comprenant:
    - un échantillonneur destiné à prélever un échantillon dans une conduite de transport, à symétrie de révolution, d'un courant principal de produits, aux fins de l'obtention d'un sous-échantillon, en quoi
    - un échantillonneur (9), entraîné en rotation, est disposé dans la conduite de transport de produits, au droit de l'entrée d'un tuyau de prélèvement (30), aux fins de l'obtention d'un sous-courant (2) du courant principal de produits, dans une proportion allant jusqu'à 1:100 par rapport au courant principal de produits (1), et ledit échantillonneur comporte une surface totale en coupe transversale qui a la forme d'un secteur de cercle d'un angle d'ouverture $\alpha$, et dans lequel ce secteur de cercle, au moins, tourne avec la pointe du secteur autour de l'axe central de la conduite de transport du courant principal de produits, et en quoi
    - l'échantillonneur dirige le sous-courant (2) vers une ouverture de sortie et, par ainsi, au tuyau de prélèvement (39), à l'extrémité duquel un diviseur d'échantillons (60) est disposé pour la division du sous-courant (2) en un sous-courant résiduel (4) et un courant d'échantillons à analyser (3) qui, à son tour, est capable d'être amené directement à un dispositif d'analyse, et dans lequel le diviseur d'échantillons (60) fait la division du sous-courant (2) en le courant à analyser (3) dans un rapport allant jusqu'à 1:1000.

24. Procédé selon la revendication 23, **caractérisé** en ce que

pour les processus de production susceptibles à des changements dans les courants principaux de produits $\dot{M}_H$, une première adaptation au courant principal de produits variable $\dot{M}_H$ est effectuée au point de l'échantillonnage, et en ce que la division de l'échantillon, en tant que deuxième adaptation, se fait proportionnellement à la première adaptation, de manière réglable et/ou variable, de sorte que le courant d'échantillons à analyser $\dot{M}_A$ soit proportionnel au courant principal de produits $\dot{M}_H$.

25. Procédé selon la revendication 23 ou 24, **caractérisé** en ce que

pour un courant principal de produits sans agent de transport, l'échantillonnage et la division de l'échantillon se feront l'une après l'autre, par rapport à la direction de la force de gravité, à un endroit de transfert des échantillons dans une conduite de transport verticale symétrique en révolution (puits à gravité).

26. Procédé selon la revendication 23 ou 24, **caractérisé** en ce que

dans une conduite de transport symétrique en révolution, l'échantillonnage de produits en dispersion qui sont guidés dans un courant porteur fluide se fait par aspiration d'un sous-courant fluide représentatif à l'aide d'une ouverture de prélèvement tournant, et est ajusté, ou réglé de nouveau on-line, proportionnellement aux conditions isocinétiques existant au point de l'échantillonnage.

# Fig. 1

Fig. 2

Fig. 3

Fig.4

Fig. 5

Fig. 6

Fig. 7